**Europäisches Patentamt**

**European Patent Office**

**Office européen des brevets**

(11) Veröffentlichungsnummer: **0 223 069**
**A2**

## (12) EUROPÄISCHE PATENTANMELDUNG

(21) Anmeldenummer: **86114323.8**

(22) Anmeldetag: **16.10.86**

(51) Int. Cl.⁴: **B 60 N 1/06**

(30) Priorität: **19.10.85 DE 8529777 U**

(43) Veröffentlichungstag der Anmeldung: **27.05.87**
**Patentblatt 87/22**

(84) Benannte Vertragsstaaten: **BE DE ES FR GB IT NL SE**

(71) Anmelder: **Ignaz Vogel GmbH & Co KG, Fahrzeugsitze,**
**Kleinsteinbacher Strasse 42-44,**
**D-7500 Karlsruhe 41-Stu (DE)**

(72) Erfinder: **Vogel, Ignaz, Dipl.-Ing., Kleinsteinbacher**
**Strasse 44, D-7500 Karlsruhe 41-Stu (DE)**

(74) Vertreter: **Trappenberg, Hans, Wendtstrasse 1,**
**D-7500 Karlsruhe 21 (DE)**

(54) **Fahrgastsitz-Armlehne.**

(57)    Fahrgastsitze in Omnibussen sind entweder mit kurzen Armstützenstummeln oder längeren, jedoch wegschwenkbaren Armlehnen ausgestattet.

Um eine gewichtsmäßig leichte und doch äußerst stabile Armlehne zu realisieren, wird nach der Erfindung ein «Lehnenring» vorgeschlagen, der unterseitig fest mit dem Sitzgestell verbunden und zweckmäßigerweise rundum gepolstert ist.

**HANS TRAPPENBERG · PATENTINGENIEUR · KARLSRUHE**
**EUROPÄISCHER PATENTVERTRETER**

30.09.1986 n54
VW 0943

IGNAZ VOGEL GmbH & Co. KG., Fahrzeugsitze
Kleinsteinbacher Straße 42-44, 7500 Karlsruhe 41-Stu

Fahrgastsitz-Armlehne

Die Erfindung betrifft eine Fahrgastsitz-Armlehne, die zumindest einseitig neben dem Sitz- beziehungsweise Rückenpolster des Fahrgastsitzes angeordnet und am Sitzuntergestell befestigt ist.

Da die Fahrgastsitze in Omnibussen oder ähnlichen Transportmitteln im allgemeinen ziemlich eng hintereinander angeordnet sind, müssen an derartigen Sitzen vorgesehene Armlehnen
dem Rechnung tragen, daß die Passagiere ohne allzu große
Behinderung auf den Sitzen Platz nehmen können. Bei starren
Armlehnen wird dies dadurch erreicht, daß praktisch nur ein
Armlehnenstummel vorhanden ist, der allenfalls dafür geeignet ist, einen Teil des Unterarms ab dem Ellenbogen aufzunehmen. Ergonomisch bessere Ausführungen stellen Armlehnen
dar, die praktisch den gesamten Unterarm bis zum Handgelenk

unterstützen können, dadurch allerdings so lang sind, daß
sie, um den Passagieren das Platznehmen beziehungsweise Aussteigen zu gestatten, aus dieser Gebrauchslage wegschwenkbar ausgeführt sein müssen.

Es kann nicht ausgeschlosen werden, sondern es ist, beispielsweise um den Durchgang zwischen derartigen Sitzreihen
freizugeben, fast die Regel, daß Passagiere auch auf den
Armlehnen Platz nehmen, sich zumindest kurzzeitig darauf
abstützen. Die Armlehnen müssen dem Rechnung tragen und daher so stabil aufgebaut sein, daß sie diese Last, auch bei
starken Erschütterungen des Fahrzeugs, aufnehmen können.
Ist dies bei dem kurzen Armlehnenstummel, der fest mit Konstruktionsteilen des Fahrgastsitzes verbunden ist, noch
nicht allzu schwierig, so treten doch Schwierigkeiten bei
den wegschwenkbaren Armlehnen auf beziehungsweise diese Armlehnen müssen äußerst stabil und damit schwer ausgeführt
werden. Trotzdem sind an diesen wegschwenkbaren Armlehnen
stets Schäden festzustellen, die einen Austausch notwendig
machen.

Bei neueren Transportfahrzeugen, insbesondere bei Luxus-
Autobussen, werden die Sitzreihen nicht in einem solch
engen Abstand voneinander angeordnet. Vielmehr sind diese
Sitzgelegenheiten so ausgeführt, daß sie zu einer Sitzmulde
mit teilweise hochgelegten Beinen verstellt werden können,
wozu allerdings ein verhältnismäßig großer Abstand zwischen
den Sitzreihen notwendig ist. Damit jedoch stören auch großdimensionierte Armlehnen, die zur Auflage des gesamten
Unterarms geeignet sind, nicht mehr, da auch bei solchen
Armlehnen noch ohne Schwierigkeiten die Einnahme des Sitzes
möglich ist. Wegschwenkbare Armlehnen, die um eine horizontal liegende Achse verschwenkbar sind und daher vom Rückenteil des Fahrgastsitzes nach vorne wegstehen, sind daher
nicht mehr notwendig beziehungsweise können sogar, dadurch
daß das vordere Ende der Armlehnen ungeschützt ist, zu Unfällen Anlaß geben.

Die Erfindung hat sich die Aufgabe gestellt, eine Armlehne anzugeben, die diesen veränderten Raumverhältnissen in Transportfahrzeugen Rechnung trägt, die leicht und trotzdem so fest ist, daß sie die Last eines Passagieres aufnehmen kann, die einfach herstellbar und auch komfortabel ist. Erreicht wird dies nach der Erfindung durch einen Lehnenring, der unterseitig unterhalb der Sitzpolsteroberseite verläuft und dort mit dem Sitzuntergestell verbunden ist, dessen Oberseite zur Armauflage gepolstert ist und an dessen Vorderseite ein herausklappbarer Aschenbecher sowie eine auswechselbare Sitznummer angebracht ist.

Nicht mehr also wie bisher wird nur ein kurzer, fest am Sitz angebrachter Armlehnenstummel oder eine wegschwenkbare Armlehne vorgesehen, sondern ein Lehnenring, der keine eventuelle Verletzungen verursachenden Spitze aufweist. Da zudem die etwa parallel zur Sitzpolsteroberfläche verlaufende Oberseite dieses Lehnenringes an beiden Enden an der Sitzkonstruktion abgestützt ist, kann dieser Lehnenring auch verhältnismäßig leicht gehalten werden und trotzdem sehr große auf ihn einwirkende Kräfte aufnehmen. Dem Komfort ist dadurch Rechnung getragen, daß an der Vorderseite ein Aschenbecher angeordnet ist sowie eine, den Sitz kennzeichnende Nummer.

Um mit Sicherheit eine Verletzung durch diesen Lehnenring zu vermeiden, wird nach der Erfindung vorgeschlagen, daß der gesamte Lehnenring gepolstert ist. Dies ist auf sehr einfache Weise dadurch möglich, daß der Lehnenring aus einem steifen Metallring mit aufgeschäumter Plastikumfassung gebildet ist.

Als zweckmäßig hat es sich erwiesen, daß an der Vorderseite
der Armauflage eine in eine etwa zum Sitzpolster parallele
Lage verschwenkbare Klappe vorgesehen ist, die an ihrer
Innenseite eine Halterung für einen Trinkbecher aufweist.

Einem weiteren Erfindungsmerkmal nach können im Lehnenring,
an dessen unterseitigen Ringteil, Achsbolzen zum Einfügen
einer die Lehnenring-Außenseite abdeckenden, herausschwenkbaren Taschenklappe angeordnet sein. Diese Taschenklappe
kann auch, zum Verwahren von Wertgegenständen, arretierbar
ausgeführt werden.

Auf der Zeichnung ist ein Ausführungsbeispiel des Erfindungsgegenstandes schematisch dargestellt, und zwar zeigen:
Fig. 1   den Lehnenring in Ansicht und
Fig. 2   den gleichen Lehnenring in Vorderansicht.

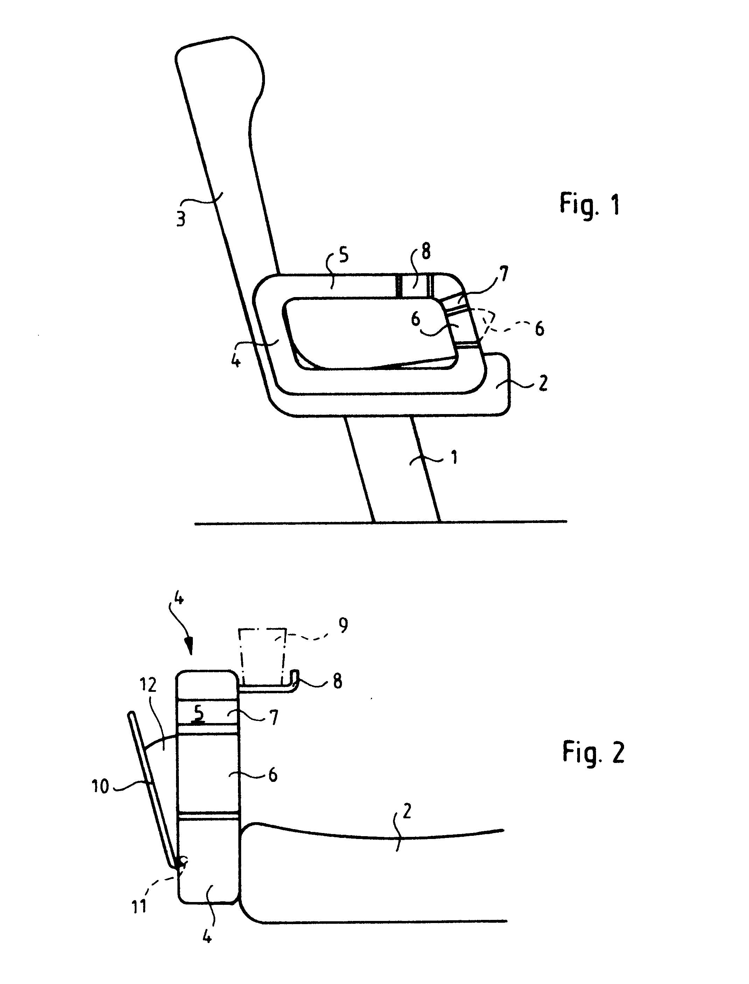

Auf einem Sitzuntergestell 1 ist ein Sitz mit Sitzpolster 2
und Rückenpolster 3 aufgebaut. An diesem Untergestell 1,
neben Sitzpolster 2 und Rückenpolster 3, ist ein Lehnenring 4 befestigt. Der obere waagreche Teil 5 dieses Lehnenrings 4 bildet hierbei die Armauflage, die in der Lage ist,
auch großen Lasten durch die etwa senkrecht verlaufenden
Lehnenringteile, die sich auf Konstruktionsteilen des
Sitzes abstützen, aufzunehmen. In der Vorderseite dieses
Lehnenringes 5 ist ein herausklappbarer Aschenbecher 6
sowie auch eine auswechselbare Sitznummer 7 angebracht. In
der Armauflage 5 befindet sich eine verschwenkbare
Klappe 8, die in der herausgeschwenkten Lage (Fig. 2) einen
Trinkbecher 9 aufnehmen kann. Seitlich kann der Lehnenring
nach der Neurung durch eine Taschenklappe 10 abgedeckt
sein. Diese Taschenklappe 10 ist um Achsbolzen 11, die im
Lehnenring 4 angeordnet sind, verschwenkbar. Die Tasche 12
dieser Taschenklappe 10 ist in angeklapptem Zustand der
Taschenklappe 10 von dem oberen Trum des Lehnenrings 4 abgedeckt, so daß die Tasche 12 damit vollkommen abgeschlossen

0223069

ist. Durch entsprechende Arretiervorrichtungen, im einfachsten Falle durch ein Schloß, jedoch möglicherweise auch
durch eine elektronische Schließvorrichtung, kann die
Taschenklappe 10 in dieser Schließlage arretiert werden.

30.09.1986 n54
VW 0943

IGNAZ VOGEL GmbH & Co. KG, Fahrzeugsitze
Kleinsteinbacher Str. 42 - 44, 7500 Karlsruhe 41-Stu.

P A T E N T A N S P R Ü C H E

1. Fahrgastsitz-Armlehne, die zumindest einseitig neben
dem Sitz- beziehungsweise Rückenpolster des Fahrgastsitzes
angeordnet und am Sitzuntergestell befestigt ist,
gekennzeichnet
durch einen Lehnenring (4), der unterseitig unterhalb der
Sitzpolsteroberseite verläuft und dort mit dem Sitzuntergestell (1) verbunden ist, dessen Oberseite zur Armauflage (5) gepolstert ist und an dessen Vorderseite ein herausklappbarer Aschenbecher (6) sowie eine auswechselbare
Sitznummer (7) angebracht ist.

2. Armlehne nach Anspruch 1,
dadurch gekennzeichnet,
daß der gesamte Lehnenring (4) gepolstert ist.

0223069

3. Armlehne nach Anspruch 2,
dadurch gekennzeichnet,
daß der Lehnenring (4) aus einem steifen Metallring mit
aufgeschäumter Plastikumfassung gebildet ist.

4. Armlehne nach einem oder mehreren
der vorhergehenden Ansprüche,
dadurch gekennzeichnet,
daß an der Vorderseite der Armauflage (5) eine in eine etwa
zum Sitzpolster (2) parallele Lage verschwenkbare
Klappe (8) vorgesehen ist, die an ihrer Innenseite eine
Halterung für einen Trinkbecher (9) aufweist.

5. Armlehne nach einem oder mehreren
der vorhergehenden Ansprüche,
dadurch gekennzeichnet,
daß im Lehnenring (4), an dessen unterseitigen Ringteil,
Achsbolzen (11) zum Einfügen einer die Lehnenring-Außenseite abdeckenden, herausschwenkbaren Taschenklappe (10)
angeordnet sind.

6. Armlehne nach Anspruch 5,
dadurch gekennzeichnet,
daß die Taschenklappe (10) in der an dem Lehnenring (4)
angeklappten Lage arretierbar ist.

Fig. 1

Fig. 2